# EUROPEAN PATENT APPLICATION

(11) **EP 2 574 843 A1**
(43) Date of publication of application: **03.04.2013**
(21) Application number: 12175841.1
(22) Date of filing: 11.07.2012
(51) Int. Cl.: F23N 1/00, F23N 5/22, F24C 3/12, F16K 31/48

(54) **A time adjusted mechanical gas shut-off system**

(30) Priority: 30.09.2011 TR 201109716
(71) Applicant: Turas Gaz Armatürleri Sanayi. Ve Ticaret A.S., 34590 Istanbul (TR)
(72) Inventor: Turhan, Gokhan, 34590 Istanbul (TR); Yavuz, Cevdet, 45030 Manisa (TR)

(57) **Abstract**

A time adjusted mechanical gas shut-off system (1.9) suitable for use in all systems operated by gas, wherein the user adjusts gas feeding time manually and gas feeding stops automatically at the end of the set time, is disclosed. The said gas shut-off system (1.9) generally consists of a gas shut-off valve (1.9.1) and a time relay (1.9.2). The said the time relay (1.9.2) consists of a timer (1.9.2.1), a shaft (1.9.2.2) and a cam (1.9.2.3). When the cam (1.9.2.3) rotates with the clockwise (+) rotational motion given to the shaft (1.9.2.2), gas shut-off valve (1.9.1) pin (1.9.1.2) is pushed forward, thus providing gas passage. When the burning starts, the time relay (1.9.2) starts counting down and rotates counterclockwise (-) till the end of the time adjusted by the user; and the pin (1.9.1.2) is placed into the cam channel (1.9.2.3.1) at the end of this time; thus, the gas is shut off.

## Description

### TECHNICAL FIELD

The invention relates to a time adjusted system, shutting the gas in the system off depending on the time adjusted manually by the user, suitable for use in all systems operated by gas, in such domestic appliances as cookers and ovens.

### PRIOR ART

As known, there are a total of four burners, with three different types, as one small, two middle, and one big, in standard domestic cookers or ovens. In addition to these, a turbo burner is provided in more developed cookers. The gas is directed to these burners by means of four gas taps mounted on the main gas connection pipe. Firing, on the other hand, is provided by a spark exiting from an external firer. In this way, the user can perform cooking or heating, by placing the saucepan or pan on the burner in the desired Kw value. However, in the said operation, it is required for the user to watch the process by the cooker during cooking time, or to get back to the cooker at the right time to turn it off. In case that the user forgets about the saucepan or pan located on the burner, not only energy expenses are increased due to excessive gas consumption, but also it becomes impossible to get the desired cooking or heating and to get the expected taste and consistency, since the object to be heated is subject to excessive heat. For example, suppose that the user knows that a meal is cooked in 20 minutes, with the big burner in fully open position. In the former case, the user will manually adjust the big burner control button to fully open position and s/he will watch the cooking process, or s/he will keep time and get back after 20 minutes to turn the cooker off. If s/he forgets about the meal on the cooker, the meal may not be as delicious and consistent as desired; moreover, unnecessary gas consumption may occur due to excessive burning of the cooker. Therefore, it is required that solutions for the users to eliminate the undesired outcomes of forgetting about the saucepan and pan on the cooker, or of having to watch the cooking process are provided. This, in turn, will be provided by introduction of a solution having an automatic gas shut-off system capable of performing these operations, depending on the time preference of the user. Within the state of the art, there are systems cutting gas flow for security reasons. However, these systems operate electrically; hence, it is highly likely that they break down, when they are subject to heat, or if any liquid gets inside the cooker. Moreover, their costs are higher than the mechanical systems.

In the patent document numbered EP 0727 616 A1, a child safety latch to prevent the flame in the shut-off burner to unintentionally flame up again is disclosed. Here, in order for the system to be activated, it is either required to turn the two gas taps on or off at the same time, or to push a separate button for some time to activate the system. Again, here, precaution is meant to be taken, in order for the system not to be activated in case that a child plays with valves of the cooking appliance. The gas is fed to the system in a time adjusted way, depending on the user option.

In the patent document of BSH Ev Aletleri San. ve Tic. A 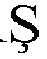 numbered TR 2009/10137, a safety system composed of a position switch, a flame detection apparatus, and a valve positioned in the main gas network and controlled electrically. As explained in the abstract of the application, the system is based on the principle that the check valve is opened by the signals taken from reset switch and flame detection apparatus, wherein it is aimed to prevent the unintentional activation of the system when the gas is closed, for providing child safety. However, it is highly likely that the system breaks down when any liquid gets into the cooker or oven, depending on the heat to which the electrical systems are subject to. Moreover, systems of this type are of higher costs compared to mechanical systems.

The invention is a time adjusted gas shut-off system operating mechanically that eliminates all of the above mentioned problems.

### OBJECT OF THE INVENTION

The main object of the invention is to introduce a time adjusted mechanical system suitable for use in all systems operated by gas, wherein the user adjusts gas feeding time manually and gas feeding stops automatically at the end of the set time.

Another object of the invention is to provide a gas shut-off system where cooking or heating operation is completed at the end of cooking time adjusted manually by the user, in cases when the said gas shut-off system is used in domestic cooking appliances, in particular cookers and ovens.

Another object of the invention is to prevent excess gas consumption, by performing the heating or cooking operations depending on the time adjusted manually by the user.

Another object of the invention is to introduce a gas shut-off system which is less likely to break down than electrical systems.

Another object of the invention is to introduce a more cost-efficient gas shut-off system compared to electrical systems.

In a preferred embodiment of the invention, the said gas shut-off system is composed of a gas shut-off valve and a time relay.

In another preferred embodiment of the invention, the said time relay consists of a timer, a shaft and a cam.

In another preferred embodiment of the invention, gas shut-off valve pin is positioned in cam channel, when the shaft is in "0" reference position.

In another preferred embodiment of the invention, the upper surface of the pin contacts with the lower surface of the cam, when the shaft is rotated clockwise from "0" reference position. In another preferred embodiment of the invention, the distance between the upper surface of the pin and the lower surface of the cam when the shaft is in "0" reference position becomes equal to the displacement distance of the pin, when the shaft is rotated clockwise.

In another preferred embodiment of the invention, when the burning process starts, the time relay starts counting down and rotates counterclockwise until the pin gets back to cam channel.

The structural and the characteristic features and all advantages of the invention will be understood more clearly with the detailed description written by referring to the following figures; therefore, the evaluation needs to be done by taking these figures and the detailed description into consideration.

### DESCRIPTION OF THE FIGURES

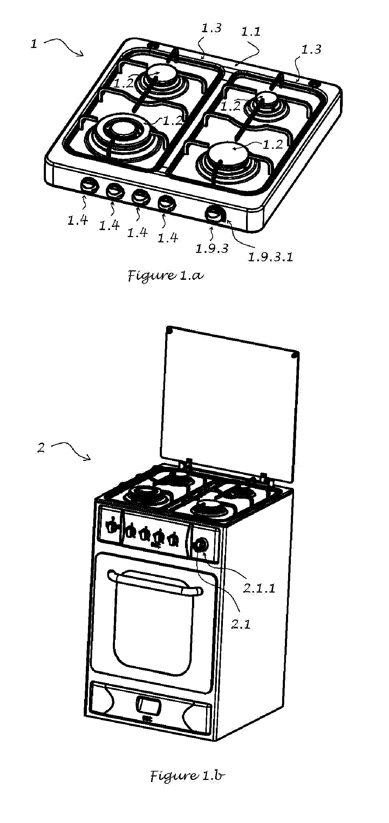

Fig. 1.a is the top perspective view of the cooker to which the gas shut-off system according to the invention is mounted,
Fig. 1.b is the top perspective view of the oven to which the gas shut-off system according to the invention is mounted,
Fig. 2 is the bottom perspective view of the cooker to which the gas shut-off system according to the invention is mounted,
Fig. 3 is the detailed view of the gas shut-off system according to the invention,
Fig. 4 is the exploded view showing time relay and gas shut-off valve,
Fig. 5 is the exploded view showing the components of time relay,
Fig. 6 is the perspective view showing the gas shut-off system according to the invention,
when the shaft is in "0" reference position,
Fig. 7 is the cross-sectional view showing the gas shut-off system according to the invention, when the shaft is in "0" reference position,
Fig. 8 is the perspective view showing the gas shut-off system according to the invention,
when the shaft is rotated clockwise (+) from "0" reference position,
Fig. 9 is the cross-sectional view showing the gas shut-off system according to the invention, when the shaft is rotated clockwise (+) from "0" reference position,

### REFERENCE NUMERALS

1. Cooker
   1.1. Cooker (1) sheet
   1.2. Cooker (1) burners
   1.3. Cooker (1) grills
   1.4. Gas control buttons
   1.5. Gas taps
   1.6. Cooker (1) main gas pipe
      1.6.1. Cooker gas inlet
   1.7. Main gas distribution pipe
   1.8. Burner gas pipes
   1.9. Time adjusted mechanical gas shut-off system
      1.9.1. Gas shut-off valve
         1.9.1.1. Body
         1.9.1.2. Pin
            1.9.1.2.1. Pin (1.9.1.2) upper surface
         1.9.1.3. Rest
         1.9.1.4. Gasket
         1.9.1.5. O-Rings
         1.9.1.6. Spring
         1.9.1.7. Gas inlet
         1.9.1.8. Gas outlet
         1.9.1.9. Union
      1.9.2. Time relay
         1.9.2.1. Timer
         1.9.2.2. Shaft
            1.9.2.2.1. The position of the shaft (1.9.2.2) in "0" reference point
            1.9.2.2.2. The state when shaft (1.9.2.2) is rotated clockwise (+)
         1.9.2.3. Cam
            1.9.2.3.1. Cam (1.9.2.3) channel
            1.9.2.3.2. Lower surface of cam (1.9.2.3)
         1.9.2.4. The state when time relay (1.9.2) starts counting down and rotates counterclockwise
      1.9.3. Gas shut-off system button
         1.9.3.1. Cooking time scale
      1.9.4. Connectors
2. Oven
   2.1. Gas shut-off system button
      2.1.1. Cooking time scale

### DETAILED DESCRIPTION OF THE INVENTION

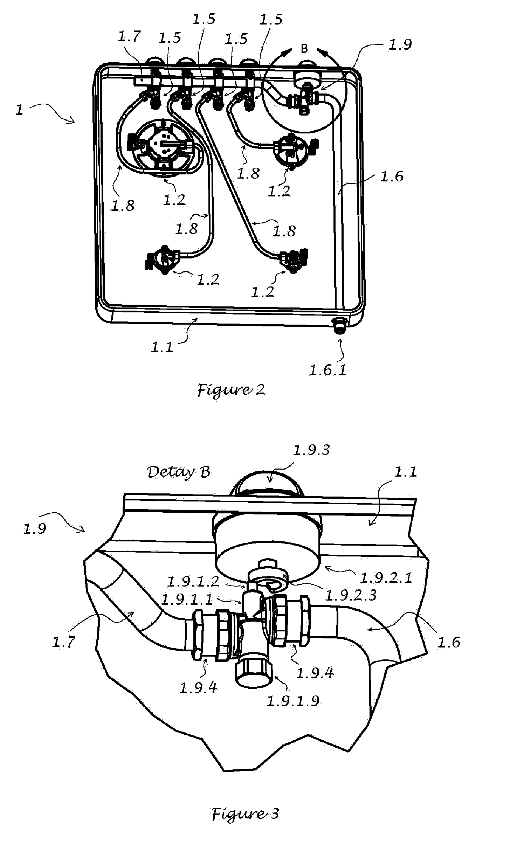

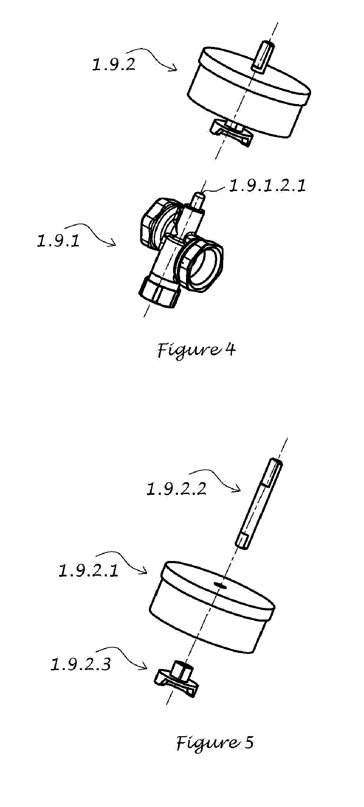

In Fig. 1.a, the top perspective view of the cooker (1) onto which the gas shut-off system according to the invention is mounted is given. As seen, a cooker (1) generally consists of cooker burners (1.2) positioned on the cooker sheet (1.1), grills (1.3) and gas control buttons (1.4). However, a separate button (1.9.3) for the gas shut-off system (1.9) according to the invention is provided in the cooker (1). The desired cooking time can be adjusted by means of this button (1.9.3), thanks to the scale (1.9.3.1) thereon. The cooking times shown on this scale may vary according to the user and manufacturer options. In Fig. 1.b, the top perspective view of the oven (2) to which the gas shut-off system according to the invention is mounted is given. Seen in Fig. 3 are button (2.1) of gas shut-off system according to the invention and cooking time scale (2.1.1). The implementation of gas shut-off system in ovens (2) is similar to that in cookers (1). Therefore, here, the gas shut-off system (1.9) is explained in detail for illustrative purposes, through the cooker (1) only. In Figure 2, bottom perspective view of the cooker (1) is given. In general, in cookers, the gas coming from gas inlet (1.6.1) reaches to main gas distribution pipe (1.7) through the main gas pipe (1.6) of the cooker. Mounted on the main gas distribution pipe (1.7) are four separate gas taps (1.5) for four cooker burners (1.2). The number of gas taps (1.5) may vary according to the number of burners (1.2). The gas exiting through gas taps (1.5) in desired flow rate is transferred to burners (1.2) by way of gas pipes (1.8). The gas shut-off system (1.9) according to the invention is mounted between main gas pipe (1.6) of the cooker and main gas distribution pipe (1.7) in order to control all the burners (1.2). This mounting is performed by means of connectors (1.9.4) from gas inlet (1.9.1.7) and gas outlets (1.9.1.8) of the gas shut-off valve (1.9.1). In Fig. 3, the detailed view of the gas shut-off system (1.9) according to the invention is given. On the other hand, the perspective views showing the components of gas shut-off system (1.9) are given in Figures 4 and 5. As seen in Figure 4, the gas shut-off system (1.9) developed is entirely mechanical and is composed, in most general terms, of a gas shut-off valve (1.9.1) and a time relay (1.9.2). Provided in the said gas shut-off valve (1.9.1) are a body (1.9.1.1) on which a gas inlet (1.9.1.7) and a gas outlet (1.9.1.8) hole are provided, a pin (1.9.1.2), a rest (1.9.1.3), a gasket (1.9.1.4), a spring (1.9.1.6), a union (1.9.1.9) and O-rings (1.9.1.5). As seen in Figure 5, the time relay (1.9.2) consists of a timer (1.9.2.1), a shaft (1.9.2.2) and a cam (1.9.2.3).

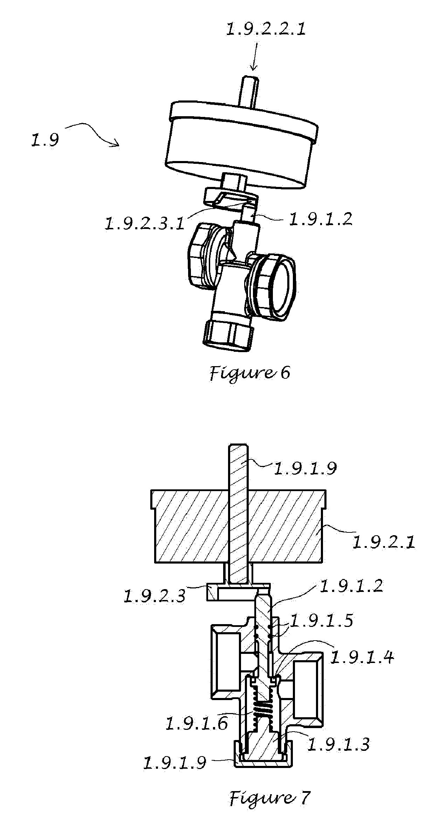

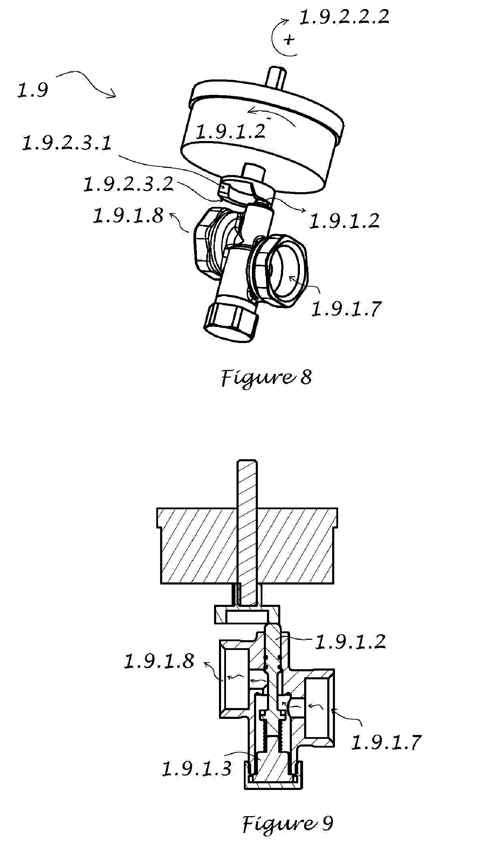

The system (1.9) operates as follows: First, the user adjusts the cooking time depending on the object desired to be cooked, by means of gas shut-off system button (1.9.3). For this, a cooking time scale (1.9.3.1) showing coking times is provided on the said button (1.9.3). When the user rotates the button (1.9.3) clockwise (1.9.2.2.2), the shaft (1.9.2.2) rotates and the rotational motion is transferred to timer (1.9.2.1) and cam (1.9.2.3), together with the shaft. A channel (1.9.2.3.1) is provided on the said cam (1.9.2.3). As seen in Figure 6, a gas shut-off valve (1.9.1) pin (1.9.1.2) is positioned in this channel (1.9.2.3.1) in "0" reference position (1.9.2.2.1). In this case, gas passage way is closed by a gasket (1.9.1.4) and no gas passage to the main gas distribution pipe (1.7) is performed (See Fig. 7). With the rotational motion taken from the shaft (1.9.2.2) by the cam (1.9.2.3), the upper surface (1.9.1.2.1) of the pin and the lower surface (1.9.2.3.2) of the cam are contacted as seen in Fig. 8; and the cam (1.9.2) advances as much as the rotational motion given to the shaft (1.9.2.2). In this case, a downward force is applied to the pin (1.9.1.2), thereby pushing it. The distance between the upper surface (1.9.1.2.1) of the pin and the lower surface (1.9.2.3.2) of the cam when the shaft (1.9.2.2) is in "0" reference position (1.9.2.2.1) is equal to the displacement distance of the pin (1.9.1.2), when the shaft (1.9.2.2) is rotated clockwise (1.9.2.2.2). In other words, when the shaft (1.9.2.2) is in "0" reference position (1.9.2.2.1), the distance between the upper surface (1.9.1.2.1) of the pin and the lower surface (1.9.2.3.2) of the cam is the push forward distance of the pin (1.9.1.2). When the pin (1.9.1.2) is pushed, the gasket (1.9.1.4) also moves down and the spring (1.9.1.6) located between the rest (1.9.1.3) and pin (1.9.1.2) is compressed. Thus, the valve (1.9.1) is in open position and gas passage from main gas pipe (1.6) of the cooker to the main gas distribution pipe (1.7) is performed. Afterwards, it is required that the desired gas tap (1.5) is opened by the user and the gas is made to reach to burners (1.2) by means of burner gas pipes (1.8). When the desired burner (1.2) starts to burn with firing, the time relay (1.9.2) starts counting down and rotates counterclockwise (1.9.2.4) till the pin (1.9.1.2) is placed into cam channel (1.9.2.3.1). When the pin (1.9.1.2) is placed into cam channel (1.9.2.3.1), gas passage is stopped and all the components of the system (1.9) get back to their first position. That is, the burner (1.2) extinguishes at the end of the cooking time adjusted by the user and the process of cooking or heating is completed again at the end of the time adjusted by the user. Thus, the system is ready for the next operation.

The gas shut-off system (1.9) according to the invention, whose working principal has been explained above, will now be described by giving an example. Suppose that a user wants to cook for 30 minutes. In this case, the user will manually rotate the gas shut-off system button (1.9.3) clockwise (1.9.2.2.2), in a way that the scale (1.9.3.1) will display 30 minutes. Afterwards, s/he will manually open the gas tap (1.5) providing gas passage into the burner (1.2) desired to be burned in the desired position and make the burner (1.2) burn. With the burning, the gas shut-off system (1.9) according to the invention will start operating and the time relay (1.9.2) will start counting down and rotating counterclockwise (1.9.2.4). After this step, it is not necessary for the user to watch the cooking operation by the cooker (1). After minute 30, when s/he gets back to the cooker (1) whenever s/he wants, the meal will be cooked and the cooker (1) will be extinguished, and the system will return to its first position, thus being ready for another cooking operation. In case that the user checks the cooker (1) before minute 30, s/he will see how much time is left for the meal to be cooked by looking at the scale (1.9.3.1).

The use of the present invention only in such domestic cooking appliances as cookers and ovens is explained above for illustrative purposes. However, the invention is suitable for use in all the systems operated by gas, as well as in domestic cooking appliances, particularly cookers and ovens.

The protection scope of this application is stated under the claims and cannot be restricted to the descriptions given only for illustrative purposes, because it is clear that any person skilled in the art can produce the novelty provided by the invention, without drifting apart from the main subject of the invention and/or s/he can apply this novelty to the other fields used in the related technique with similar purposes. Therefore, it is obvious that such embodiments will lack novelty, and especially will lack the criteria of exceeding the prior art.

## Claims

1. The invention is a time adjusted mechanical gas shut-off system (1.9) suitable for use in all systems operated by gas including domestic cooking appliances such as cookers and ovens; **characterized in that** it is composed of a gas shut-off valve (1.9.1) and a time relay (1.9.2).

2. A gas shut-off system (1.9) according to Claim 1; **characterized in that** the said time relay (1.9.2) is composed of a timer (1.9.2.1), a shaft (1.9.2.2) and a cam (1.9.2.3).

3. A gas shut-off system (1.9) according to any one of the preceding Claims;
**characterized in that** the gas shut-off valve (1.9.1) pin (1.9.1.2) is positioned in cam channel (1.9.2.3.1), when the shaft (1.9.2.2) is in "0" reference position (1.9.2.2.1).

4. A gas shut-off system (1.9) according to any one of the preceding Claims;
**characterized in that** gas passage is provided by contacting the upper surface (1.9.1.2.1) of the pin with the lower surface (1.9.2.3.2) of the cam and pushing the pin (1.9.1.2) forward, when the shaft (1.9.2.2) is rotated clockwise (1.9.2.2.2) from "0" reference position (1.9.2.2.1).

5. A gas shut-off system (1.9) according to any one of the preceding Claims;
**characterized in that** the distance between the upper surface (1.9.1.2.1) of the pin and the lower surface (1.9.2.3.2) of the cam when the shaft (1.9.2.2) is in "0" reference position (1.9.2.2.1) is equal to the displacement distance of the pin (1.9.1.2), when the shaft (1.9.2.2) is rotated clockwise (1.9.2.2.2).

6. A gas shut-off system (1.9) according to any one of the preceding Claims;
**characterized in that**, when the burning process starts, the time relay (1.9.2) starts counting down and rotates counterclockwise (1.9.2.4) until the pin (1.9.1.2) gets back to cam channel (1.9.2.3.1).
